# FASCICULE DE BREVET EUROPEEN

(11) **EP 2 097 849 B1**
(45) Date de publication et mention de la délivrance du brevet: **10.12.2014**
(21) Numéro de dépôt: 07872438.2
(22) Date de dépôt: 21.12.2007
(51) Int. Cl.: G06F 21/34, G06F 21/35, G06F 21/55, G07F 7/08, G07F 7/10, G06Q 20/34, G07C 9/00

(54) **DISPOSITIF ELECTRONIQUE PORTABLE ET PROCEDE DE SECURISATION D'UN TEL DISPOSITIF**
TRAGBARE ELEKTRONISCHE VORRICHTUNG UND VERFAHREN ZUR BEFESTIGUNG EINER DERARTIGEN VORRICHTUNG
PORTABLE ELECTRONIC DEVICE AND METHOD FOR SECURING SUCH DEVICE

(30) Priorité: 26.12.2006 FR 0655960
(43) Date de publication de la demande: 09.09.2009
(73) Titulaire: Oberthur Technologies, 92700 Colombes (FR)
(72) Inventeur: GOYET, Christophe, F-69004 Lyon (FR)
(74) Mandataire: Santarelli
(86) Numéro de dépôt international: PCT/FR2007/002157
(87) Numéro de publication internationale: WO 2008/096078

(56) Documents cités:
- EP-A- 1 467 312
- US-A1- 2005 216 955
- US-A1- 2006 113 381
- US-A1- 2006 283 960

## Description

La présente invention concerne un dispositif électronique portable et un procédé de sécurisation d'un tel dispositif. Elle s'applique, en particulier, aux entités microélectroniques comportant deux interfaces. Elle concerne la gestion de la sécurité d'entités électroniques portables présentant plusieurs interfaces et, plus particulièrement, à la gestion de l'authentification d'une telle entité.

L'utilisation de compteurs de défauts dans un microcircuit sécurisé est bien connue. Ces compteurs de défauts sont utilisés, par exemple, dans des cartes à puce pour surveiller l'utilisation d'un code d'identification personnel, connu sous le nom de « PIN » (acronyme de « Personal Identification Number ») code. Par exemple, lorsqu'un code PIN incorrect est reçu par la carte, un compteur de défauts est incrémenté de un. Si le code PIN suivant est correct, le compteur de défauts est remis à zéro. Sinon, le compteur est incrémenté de nouveau. De cette manière, le compteur de défauts conserve le décompte du nombre de codes incorrects successivement reçus. Lorsque la valeur de ce compteur atteint une certaine limite, l'utilisation ultérieure du code, et de la carte, est bloquée.

Généralement, les cartes sont fournies avec un mécanisme qui autorise l'accès, par le biais de différents codes secrets, pour débloquer une carte bloquée. Ces codes secrets sont normalement conservés par le fournisseur de la carte, par exemple une banque. Ainsi, le porteur de la carte est obligé de se tourner vers le fournisseur de la carte ou une autorité similaire, pour faire débloquer sa carte.

On connaît le document FR 2 786 006, qui présente un dispositif anti-fraude pour une carte à circuit intégré comportant une mémoire de données et un compteur. Le compteur compte, d'une part, un nombre d'occurrences d'événements survenus dans le dispositif et est, d'autre part, susceptible d'atteindre une valeur seuil. Un élément indicateur passe d'un premier état à un second état lorsque le compteur a atteint la valeur seuil et bloque le fonctionnement de la carte.

L'inconvénient de ces procédures est particulièrement clair dans le cas des cartes à doubles interfaces, l'une avec contact et l'autre sans contact. Un attaquant pourrait utiliser l'interface sans contact pour bloquer la carte sans que le porteur de la carte n'en soit informé, par exemple, en envoyant une série de requêtes d'authentification avec des codes d'authentification incorrects. Une telle attaque effectuée à large échelle, pourrait causer un dommage considérables aux porteurs de cartes et au fournisseur de cartes obligé d'intervenir pour débloquer les cartes ainsi bloquées.

Le document US 2006/0283960 divulgue une carte à puce sans contact comportant un mécanisme de désactivation de son antenne et un circuit de sécurité sensible à la lumière.

Le document EP 1 467 312 divulgue un système de partage de mémoire entre plusieurs applications, par exemple dans une carte à puce, dans lequel des codes PIN sont vérifiés avant chaque lancement d'une application.

La présente invention vise, notamment, à remédier à ces inconvénients et à contrecarrer une telle attaque. A cet effet, la présente invention vise, selon un premier aspect, un dispositif selon la revendication 1.

Selon des caractéristiques particulières, les premiers moyens de sécurité mettent en oeuvre un code secret, les moyens d'administration étant adaptés à modifier ledit code secret.

Selon des caractéristiques particulières, les premiers moyens de sécurité mettent en oeuvre une clé cryptographique, les moyens d'administration étant adaptés à modifier ladite clé cryptographique.

Selon des caractéristiques particulières, les premiers moyens de sécurité mettent en oeuvre des données biométriques, les moyens d'administration étant adaptés à modifier lesdites données biométriques.

Selon des caractéristiques particulières, les moyens d'administration sont adaptés à ré-autoriser une communication de données mettant en oeuvre ladite première interface après interdiction, par les premiers moyens de sécurité, de ladite communication sur détection d'une dite attaque.

Selon des caractéristiques particulières, la première interface est munie de premiers moyens de réception de données depuis une première entité électronique externe, d'une première zone mémoire de données contenant au moins un premier élément compteur, au moins un premier élément indicateur et au moins une première valeur seuil, ledit premier élément compteur comptant, d'une part, au moins un nombre d'occurrences d'un premier événement prédéterminé survenu dans ledit dispositif sur réception de données par lesdits premiers moyens de réception, et, étant, d'autre part, susceptible d'atteindre ladite première valeur seuil, ledit premier élément indicateur passant d'un premier état à un second état lorsque ledit premier élément compteur a atteint ladite première valeur seuil.

Selon des caractéristiques particulières, la deuxième interface est munie de deuxièmes moyens de réception de données depuis une deuxième entité électronique externe, d'une deuxième zone mémoire de données contenant au moins un deuxième élément compteur, au moins un deuxième élément indicateur et au moins une deuxième valeur seuil, ledit deuxième élément compteur comptant, d'une part, au moins un nombre d'occurrences d'un deuxième événement prédéterminé survenu dans ledit dispositif sur réception de données par lesdits deuxièmes moyens de réception, et, étant, d'autre part, susceptible d'atteindre ladite deuxième valeur seuil, ledit deuxième élément indicateur passant d'un premier état à un second état lorsque ledit deuxième élément compteur a atteint ladite deuxième valeur seuil.

Selon des caractéristiques particulières, la première zone mémoire et la deuxième zone mémoire sont différentes.

On observe que les première et deuxième entités électroniques externes peuvent être la même entité électronique, par exemple un lecteur de carte ou un ordinateur personnel.

Grâce à chacune de ces dispositions, on sécurise de façon différente les différentes interfaces, par exemple une tentative d'accès. Par exemple, une tentative d'authentification est sécurisé différemment, selon qu'il est déclenché par l'intermédiaire de la première interface ou de la deuxième interface, de façon à s'adapter aux caractéristiques de chaque interface, par exemple la portée, dans le cas d'une interface sans contact, et la fréquence des communications sur l'interface.

Selon des caractéristiques particulières, le dispositif tel que succinctement exposé ci-dessus comporte un moyen de blocage d'au moins une partie du fonctionnement dudit dispositif lorsqu'un élément indicateur est dans le second état.

Selon des caractéristiques particulières, le dispositif tel que succinctement exposé ci-dessus comporte un moyen de blocage qui bloque toute exécution sur réception de données sur l'interface correspondante lorsque l'élément indicateur correspondant est dans le second état.

Selon des caractéristiques particulières, le dispositif tel que succinctement exposé ci-dessus comporte un moyen de blocage qui bloque toute exécution sur réception de données sur l'interface correspondante lorsque l'élément indicateur correspondant est dans le second état sauf la réception d'une instruction de déblocage.

Grâce à chacune de ces dispositions, on bloque seulement l'interface sur laquelle on a détecté une attaque. L'autre interface reste utilisable et, par exemple, peut être utilisée pour le déblocage de l'interface bloquée.

Selon des caractéristiques particulières, le dispositif tel que succinctement exposé ci-dessus comporte un moyen de commutation adapté à mettre en oeuvre des moyens de sécurisation du dispositif plus sécurisés lorsqu'un élément indicateur est dans le second état que lorsque le moyen indicateur est dans le premier état.

Selon des caractéristiques particulières, un dit événement correspond à la mise en oeuvre d'un traitement impliquant une valeur secrète mémorisée dans une zone mémoire du dispositif électronique.

Ainsi, en contrôlant le nombre d'occurrences d'utilisation d'une valeur secrète, par exemple un code d'identification personnel, on permet d'éviter certaines attaques destinées à découvrir tout ou partie de cette valeur secrète.

Selon des caractéristiques particulières, un dit événement est une tentative échouée d'authentification auprès du dispositif électronique.

Grâce à ces dispositions, on peut résister à des attaques consistant à effectuer, successivement, un grand nombre de tentatives d'authentification, comme exposé ci-dessus.

Selon des caractéristiques particulières, un dit événement est l'utilisation d'une clé cryptographique. On dénombre ainsi les opérations de signature, de cryptage et/ou décryptage réalisées par le dispositif, par exemple pour mettre en oeuvre un protocole de type « challenge/response », consistant en l'envoi d'un nombre aléatoire par le dispositif, cryptage du nombre aléatoire avec une clef mémorisée par l'entité externe qui souhaite s'authentifier, et en l'envoi au dispositif du résultat du cryptage pour que le dispositif vérifie qu'il obtient le même résultat calculé de son coté avec la même clef. Ces opérations sont effectuées sur réception d'une commande ou d'un message sur une interface.

Selon des caractéristiques particulières, le dispositif tel que succinctement exposé ci-dessus comporte un moyen de commande de passage d'au moins un élément indicateur du second état au premier état, lors d'une tentative d'authentification réussie mettant en oeuvre une interface ne correspondant pas audit élément indicateur.

On peut ainsi débloquer une interface en mettant en oeuvre une autre interface. Ainsi, sur réception de données d'authentification correctes par les moyens de réception d'une interface, on fait passer l'élément indicateur correspondant à une autre interface, d'un état de blocage à un état de déblocage. Par exemple, dans le cas de l'attaque citée ci-dessus, dans laquelle un attaquant effectue de multiples tentatives de connexion sans contact avec le dispositif et que le dispositif bloque l'interface sans contact, on peut débloquer cette interface sans contact par une authentification correcte mettant en oeuvre une interface par contact sans faire intervenir le fournisseur du dispositif. Par exemple, si le dispositif sert de badges pour entrer dans un site, on évite ainsi de bloquer l'entrée d'un porteur de dispositif dont l'interface sans contact st bloquée, en lui donnant accès à un lecteur de carte par contact avec clavier permettant à cette personne de saisir, au clavier un code d'identification personnel.

Selon des caractéristiques particulières, le dispositif tel que succinctement exposé ci-dessus comporte un moyen d'initialisation du compteur correspondant, ledit moyen d'initialisation réinitialisant ledit compteur correspondant lorsqu'une authentification mettant en oeuvre l'interface correspondante est réussie.

Selon des caractéristiques particulières, lesdites première et deuxième interfaces mettent en oeuvre des protocoles de communication différents.

L'invention s'applique ainsi aux cartes possédant une interface avec contact et une interface sans contact.

Selon des caractéristiques particulières, ladite première interface comporte des moyens de réception de données par un protocole de communication sans contact.

Selon des caractéristiques particulières, ladite première interface comporte des moyens de réception de données mettant en oeuvre un protocole de communication sans contact conforme à la norme ISO14443.

Selon des caractéristiques particulières, ladite deuxième interface comporte des moyens de réception de données mettant en oeuvre un protocole de communication par contact.

Selon des caractéristiques particulières, ladite deuxième interface comporte des moyens de réception de données mettant en oeuvre un protocole conforme à la norme ISO7816.

Selon des caractéristiques particulières, ledit dispositif électronique est une carte à microcircuit ou une clef USB (acronyme de « Universal Serial Bus» pour bus série universel).

Selon des caractéristiques particulières, le dispositif tel que succinctement exposé ci-dessus est conforme à la norme FIPS (acronyme de « Federal Information Processing Standards») ou un critère commun.

La présente invention vise, selon un deuxième aspect, un procédé selon la revendication 14.

Les avantages, buts et caractéristiques particulières de ce procédé tant similaires à ceux du dispositif objet de la présente invention, tel que succinctement exposé ci-dessus, ils ne sont pas rappelés ici.

D'autres avantages, buts et caractéristiques particulières de la présente invention ressortiront de la description qui va suivre, faite, dans un but explicatif et nullement limitatif en regard des dessins annexés, dans lesquels:
- la figure 1 représente, schématiquement, un premier mode de réalisation du dispositif objet de la présente invention,
- la figure 2 représente, schématiquement, des éléments incorporés dans un composant illustré en figure 1 et
- la figure 3 représente, sous forme d'un logigramme, des étapes mises en oeuvre dans un mode de réalisation particulier du procédé objet de la présente invention.

On note que les figures ne sont pas réalisées à l'échelle.

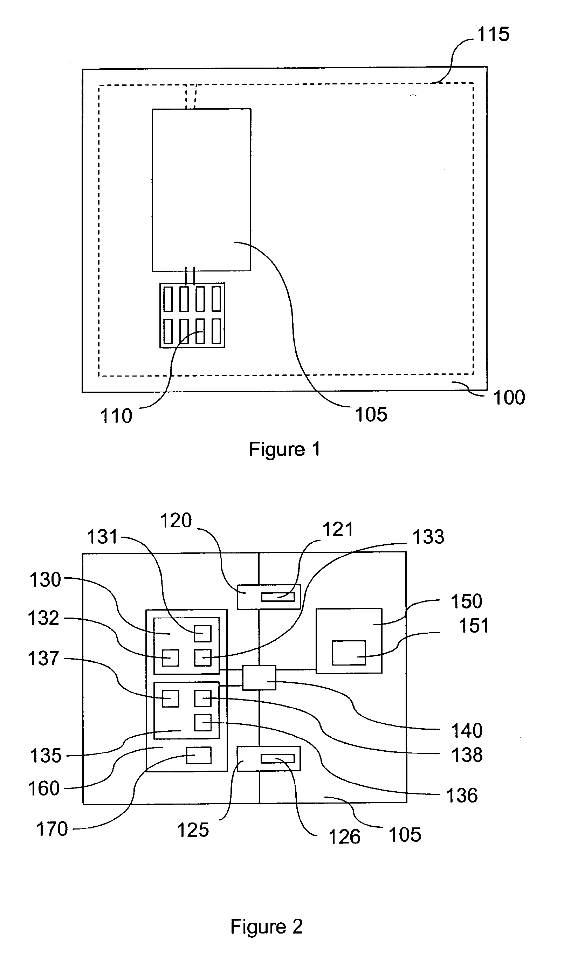

On observe, en figure 1, un dispositif, ou entité, électronique portable 100 comportant un microcircuit 105, relié, d'une part, à une antenne 115 et, d'autre part, à des contacts 110.

Le dispositif 100 peut être alimenté par l'intermédiaire des contacts 110, par un champ magnétique alternatif reçu par l'antenne 115 ou par une source d'énergie interne (non représentée), par exemple une pile, éventuellement solaire.

Dans des modes de réalisation, le dispositif électronique 100 est une carte à microcircuit, une clef USB (acronyme de « Universal Serial Bus » pour bus série universel), un terminal mobile communicant, un assistant personnel numérique ou un passeport. Dans des modes de réalisation, le dispositif 100 est conforme à norme FIPS (acronyme de « Federal Information Processing Standards ») ou un critère commun.

Dans le cas où le dispositif 100 est une carte à microcircuit, les contacts 110 sont, par exemple, des contacts affleurant à la surface de la carte 100 et conformes à la norme ISO 7816. En revanche, dans le cas où le dispositif 100 est une clé USB, les contacts 110 sont, par exemple, ceux d'un connecteur USB mâle.

On observe, en figure 2, que le microcircuit 105 comporte une unité centrale de traitement, ou « CPU » (acronyme de « Central Processing Unit ») 140, reliée à :
- une mémoire non volatile 150,
- une première interface sans contact 120 associée à l'antenne 115 et comportant des premiers moyens de réception et, éventuellement, d'émission de données 121,
- une deuxième interface par contact 125 associée aux contacts 110 et comportant des deuxième moyens de réception et, éventuellement, d'émission de données 126 et
- une mémoire 160 qui comporte une première zone mémoire 130 en relation avec la première interface 120, une deuxième zone mémoire 135, différente de la première zone mémoire 130, en relation avec la deuxième interface 125 et une zone mémoire de code(s) secret(s), de données biométriques, par exemple représentative d'empreinte digitale ou de clé(s) cryptographique(s) 170.

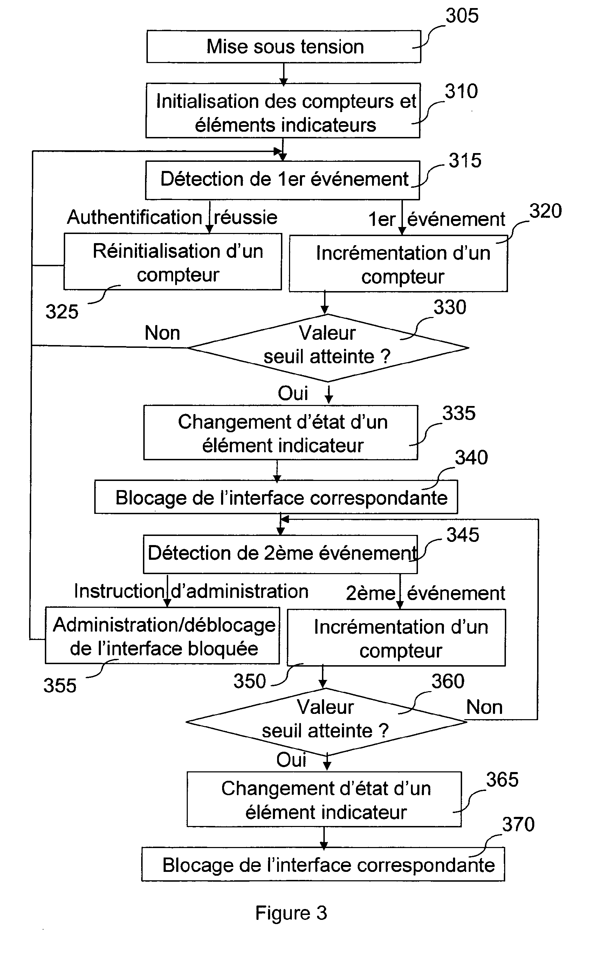

Comme exposé ci-dessous, en combinaison avec les éléments compteur 131, indicateur 132 et la valeur seuil 133 et avec le système d'exploitation 151, l'unité centrale 140 constitue des premiers moyens de sécurité de la première interface 120, par exemple par la mise en oeuvre des étapes 315 à 340 illustrées en figure 3.

Comme exposé ci-dessous, en combinaison avec les éléments compteur 136, indicateur 137 et la valeur seuil 138 et avec le système d'exploitation 151, l'unité centrale 140 constitue des deuxièmes moyens de sécurité de la deuxième interface 125, par exemple par la mise en oeuvre des étapes 345 à 370 illustrées en figure 3.

En combinaison avec le système d'exploitation 151, l'unité centrale 140 constitue des moyens d'administration des premiers moyens de sécurité mettant en oeuvre la deuxième interface pour administrer les premiers moyens de sécurité de la première interface 120, par exemple par la mise en oeuvre des étapes 345 et 355 illustrées en figure 3.

La mémoire non volatile 150, par exemple une mémoire morte, ROM (acronyme de « Read Only Memory ») conserve le système d'exploitation 151 du dispositif 100.

La mémoire 160 est une mémoire volatile, par exemple une mémoire EEPROM (acronyme de « Electrically Erasable Programmable Read Only Memory » pour mémoire morte électriquement effaçable et programmable) ou une mémoire Flash.

La première zone mémoire 130 comporte au moins un premier élément compteur 131, au moins un premier élément indicateur 132 et au moins une première valeur seuil 133. Le premier élément compteur 131 compte au moins un nombre d'occurrences d'un premier événement prédéterminé survenu dans le dispositif 100 sur réception de données par les premiers moyens de réception 121. La valeur du premier élément compteur 131 est susceptible d'atteindre la première valeur seuil 133. Le premier élément indicateur 132, par exemple une unité binaire, ou « bit », passe d'un premier état à un second état lorsque ledit premier élément compteur 131 atteint la première valeur seuil 133. Par exemple, la première valeur seuil 133 est égale à « 5 ».

Dans le mode de réalisation du dispositif objet de la présente invention illustré en figures 1 et 2, la première interface 120 comporte des moyens de réception de données, ou messages, 121 par un protocole de communication sans contact, par exemple mettant en oeuvre un protocole de communication sans contact conçu pour communiquer à des distances allant jusqu'à 50 centimètres, par exemple conforme à la norme ISO14443 ou conforme à la norme NFC (acronyme de « Near Field Communication » pour communication à champ proche), ou « zigbee » (marque déposée) apte à réaliser des communications à des distances plus importantes, de quelques mètres.

La deuxième zone mémoire 135 comporte au moins un deuxième élément compteur 136, au moins un deuxième élément indicateur 137 et au moins une deuxième valeur seuil 133. Le deuxième élément compteur 136 compte au moins un nombre d'occurrences d'un deuxième événement prédéterminé survenu dans le dispositif 100 sur réception de données par les deuxièmes moyens de réception 126. La valeur du deuxième élément compteur 136 est susceptible d'atteindre la première valeur seuil 138. Le deuxième élément indicateur 137, par exemple une unité binaire, ou « bit », passe d'un premier état à un second état lorsque ledit premier deuxième compteur 136 atteint la deuxième valeur seuil 138. Par exemple la deuxième valeur seuil 138 est égale à 3.

Dans le mode de réalisation du dispositif objet de la présente invention illustré en figures 1 et 2, la deuxième interface 125 comporte des moyens de réception de données 126 mettant en oeuvre un protocole de communication par contact, par exemple conforme à la norme ISO7816.

Dans le mode de réalisation du dispositif objet de la présente invention illustré en figures 1 et 2, les première et deuxième interfaces mettent en oeuvre des protocoles de communication différents. L'invention s'applique ainsi particulièrement aux cartes possédant une interface avec contact et une interface sans contact. L'entité électronique externe est, par exemple, un lecteur de cartes à puce avec contact et sans contact, dans le cas où le dispositif 100 est une carte à microcircuit, ou un ordinateur personnel, dans le cas où le dispositif 100 est une clé USB.

Dans des variantes non représentées, la deuxième interface comporte des moyens de réception de données mettant en oeuvre un protocole zigbee ou USB.

Préférentiellement, le fonctionnement du dispositif 100 est affecté par l'état de chacun des éléments indicateurs 132 et 137.

Ainsi, par exemple, on sécurise de façon différente les différentes interfaces, pour des événements mettant en oeuvre l'une des interfaces, par exemple une tentative d'accès, par exemple à la mémoire ou à une des zones de la mémoire ou à certaines commandes. Par exemple, un même événement est sécurisé différemment, selon qu'il est déclenché par l'intermédiaire de la première interface ou de la deuxième interface, de façon à s'adapter aux caractéristiques de chaque interface, par exemple la portée, dans le cas d'une interface sans contact, et/ou la fréquence des communications sur l'interface.

Dans des modes de réalisation, au moins l'un des événements prédéterminés correspond à la mise en oeuvre d'un traitement impliquant une valeur secrète mémorisée dans une zone mémoire du dispositif électronique. Ainsi, en contrôlant le nombre d'occurrences d'utilisation d'une valeur secrète, par exemple un code d'identification personnel, on évite certaines attaques destinées à découvrir tout ou partie de cette valeur secrète.

Dans des modes de réalisation, au moins l'un des événements prédéterminés est une tentative échouée d'authentification auprès du dispositif électronique 100, ce qui permet aussi d'éviter des d'attaques consistant à répéter la tentative d'authentification.

Dans des modes de réalisation, au moins l'un des événements prédéterminés est une présentation de code PIN.

Dans des modes de réalisation, au moins l'un des événements prédéterminés est l'utilisation d'une clé cryptographique. On dénombre ainsi les opérations de signature, de cryptage et/ou décryptage réalisées par le dispositif pour mettre en oeuvre un protocole de type « challenge/response ».

Dans des modes de réalisation, le système d'exploitation 151 du dispositif 100 comporte un moyen de blocage d'au moins une partie du fonctionnement du dispositif 100 lorsqu'un élément indicateur est dans le second état. Par exemple, le dispositif 100 comporte un moyen de blocage (non représenté) qui bloque toute exécution sur réception de données sur l'interface correspondante lorsque l'élément indicateur correspondant est dans le second état. Par exemple, le dispositif 100 comporte un moyen de blocage (non représenté) qui bloque toute exécution sur réception de données sur l'interface correspondante lorsque l'élément indicateur correspondant est dans le second état sauf la réception d'une instruction de déblocage. Ainsi, on bloque seulement l'interface sur laquelle on a détecté une attaque. L'autre interface reste utilisable et, par exemple, peut être utilisée pour le déblocage de l'interface bloquée.

Dans des modes de réalisation particuliers, le dispositif 100 comporte un moyen de commutation (non représenté) adapté à mettre en oeuvre des moyens de sécurisation du dispositif plus sécurisés lorsqu'un élément indicateur est dans le second état que lorsque le moyen indicateur est dans le premier état.

Dans des modes de réalisation particuliers, le système d'exploitation 151 du dispositif 100 comporte un moyen de commande (non représenté) de passage d'au moins un élément indicateur du second état au premier état, lors d'une tentative d'authentification réussie mettant en oeuvre une interface ne correspondant pas audit élément indicateur. On peut ainsi débloquer une interface en mettant en oeuvre une autre interface. Ainsi, sur réception de données d'authentification correctes par les moyens de réception d'une interface, on fait passer l'élément indicateur correspondant à une autre interface, d'un état de blocage à un état de déblocage. Par exemple, dans le cas de l'attaque citée ci-dessus, dans laquelle un attaquant effectue de multiples tentatives d'authentification sans contact avec le dispositif et que le dispositif bloque l'interface sans contact, on peut débloquer cette interface sans contact par une authentification correcte mettant en oeuvre une interface par contact sans faire intervenir le fournisseur du dispositif. Par exemple, si le dispositif sert de badges pour entrer dans un site, on évite ainsi de bloquer l'entrée d'un porteur de dispositif dont l'interface sans contact est bloquée, en lui donnant accès à un lecteur de carte par contact avec clavier permettant à cette personne de saisir, au clavier un code d'identification personnel. Cet avantage est déterminant dans le cas d'une attaque à grande échelle visant un grand nombre de cartes d'accès.

Dans des modes de réalisation particuliers, le système d'exploitation 151 comporte un moyen d'initialisation (non représenté) du compteur d'au moins une zone mémoire, le moyen d'initialisation réinitialisant ce compteur lorsqu'une authentification mettant en oeuvre l'interface correspondante est réussie.

Dans des modes de réalisation particuliers, au moins une zone mémoire comporte un moyen d'initialisation (non représenté) du compteur correspondant, le moyen d'initialisation réinitialisant le compteur correspondant lorsqu'un déblocage de l'interface correspondante est effectué.

Les étapes illustrées en figure 3 sont plus particulièrement adaptées au mode de réalisation du dispositif objet de la présente invention illustré en figures 1 et 2, dans le cas où la première interface, sans contact, est utilisée pour une authentification mutuelle du dispositif 100 et d'un lecteur et où la deuxième interface, avec contact est reliée à une entité électronique externe de type lecteur de carte à contact comportant un clavier pour saisir un code PIN ou un capteur d'empreinte digitale et des moyens pour envoyer, sur la deuxième interface, des informations représentatives de ce code PIN ou de cette empreinte digitale au dispositif 100. La présente invention est aussi particulièrement adaptée au cas où le dispositif 100 comporte un capteur d'empreinte digitale et des moyens pour envoyer des informations représentatives de l'empreinte digitale captée à un lecteur externe, par l'intermédiaire de la deuxième interface.

On observe, en figure 3, une étape 305 de mise sous tension du dispositif objet de la présente invention. Puis, au cours d'une étape 310, on initialise les valeurs des compteurs et des éléments indicateurs.

Au cours d'une étape 315, on détecte si un premier événement prédéterminé survient sur réception de données par la première interface du dispositif portable. Dans la suite de la description, on considère que le premier événement est une tentative échouée d'authentification mutuelle d'un lecteur et du dispositif électronique mettant en oeuvre la première interface, sans contact. Dans des variantes, le premier événement peut être une tentative d'authentification mettant en oeuvre des données biométriques, par exemple des données représentatives d'une empreinte digitale.

Au cours de l'étape 315, on détecte aussi si une tentative d'authentification a réussi.

Si le premier événement prédéterminé survient, au cours d'une étape 320, on incrémente le compteur conservé dans la zone mémoire associée à l'interface sans contact, sur laquelle des données provoquant l'événement prédéterminé ont été reçues.

Si une tentative d'authentification a réussi, au cours d'une étape 325, on réinitialise le compteur conservé dans la zone mémoire associée à l'interface sans contact, sur laquelle des données provoquant l'événement prédéterminé ont été reçues et on retourne à l'étape 315.

A la suite de l'étape 320, au cours d'une étape 330, on compare la valeur du compteur incrémenté au cours de l'étape 320 avec une valeur seuil correspondant à la première interface et à la zone mémoire en question.

Si la valeur du compteur n'atteint pas la valeur seuil, on retourne à l'étape 315. Si, au contraire, la valeur du compteur atteint la valeur seuil, au cours d'une étape 335, on fait passer l'élément indicateur correspondant à l'interface sans contact d'un premier état, par exemple représentant la valeur « 0 », à un deuxième état, par exemple représentant la valeur « 1 ».

Dans le mode de réalisation illustré en figure 3, lorsque l'élément indicateur associé à l'interface sans contact est dans le deuxième état, au cours d'une étape 340, on augmente le niveau de sécurité de l'interface considérée, par exemple en effectuant une commutation pour mettre en oeuvre des moyens de sécurisation du dispositif plus sécurisés que lorsque le moyen indicateur est dans le premier état, ou on bloque l'utilisation de cette interface sans contact. Dans les deux cas, on parle, dans la suite de la description de la figure 3, d'une interface « bloquée ».

Au cours d'une étape 345, on détecte si un deuxième événement prédéterminé, par exemple une tentative d'authentification mettant en oeuvre un code PIN, survient sur réception de données par l'interface à contact, non bloquée. Au cours de l'étape 345, on détecte aussi si une instruction d'administration de la sécurité de la première interface, sans contact, a été reçue. Par exemple cette instruction d'administration concerne une modification de code secret, par exemple de code PIN, de données biométriques ou de clé cryptographique ou une instruction de déblocage de l'interface sans contact, bloquée.

Si le deuxième événement prédéterminé survient, au cours d'une étape 350, on incrémente le compteur conservé dans la zone mémoire associée à l'interface non bloquée.

Si une instruction de déblocage de l'interface bloquée a été reçue, au cours d'une étape 355, on débloque l'interface sans contact et on réinitialise le compteur conservé dans la zone mémoire associée à l'interface débloquée et on retourne à l'étape 315. On observe que, dans des variantes, une authentification réussie constitue une instruction de déblocage.

Si une instruction de modification de code secret, par exemple de code PIN, de données biométriques ou de clé cryptographique a été reçue, au cours de l'étape 355, on modifie les données considérées, en mémoire du dispositif, et on débloque l'interface sans contact.

A la suite de l'étape 350, au cours d'une étape 360, on compare la valeur du compteur incrémenté au cours de l'étape 350 avec une valeur seuil correspondant à l'interface à contact et à la zone mémoire en question.

Si la valeur du compteur n'atteint pas la valeur seuil, on retourne à l'étape 345. Si, au contraire, la valeur du compteur atteint la valeur seuil, au cours d'une étape 365, on fait passer l'élément indicateur correspondant à l'interface à contact d'un premier état, par exemple représentant la valeur « 0 », à un deuxième état, par exemple représentant la valeur « 1 ».

Comme exposé plus haut, dans le mode de réalisation illustré en figure 3, lorsque l'élément indicateur associé à l'interface à contact, non bloquée est dans le deuxième état, au cours d'une étape 370, on augmente le niveau de sécurité de l'interface à contact, par exemple en effectuant une commutation pour mettre en oeuvre des moyens de sécurisation du dispositif plus sécurisés que lorsque le moyen indicateur est dans le premier état, ou on bloque l'utilisation de cette interface à contact.

Dans la description de la figure 3, on a considéré que le premier événement est une tentative échouée d'authentification de la part du lecteur auprès du dispositif électronique. Plus généralement, au moins l'un des premier et deuxième événements prédéterminés comporte la mise en oeuvre d'un traitement impliquant une valeur secrète, par exemple l'utilisation d'une clé cryptographique de chiffrement, de déchiffrement ou de signature, mémorisée dans une zone mémoire, par exemple la mémoire 170, du dispositif électronique. Dans certains cas, on ne réinitialise pas le compteur de mises en oeuvre d'un traitement impliquant une valeur secrète, au cours de l'étape 325.

Ainsi, conformément au procédé objet de la présente invention illustré en figure 3, on effectue :
- une étape de communication avec une première entité électronique externe par l'intermédiaire d'une première interface,
- une étape de détection d'au moins un type d'attaque mettant en oeuvre la première interface et d'interdiction d'au moins une communication de données mettant en oeuvre ladite première interface après détection d'une dite attaque,
- une étape de communication avec une deuxième entité électronique externe par l'intermédiaire d'une deuxième interface différente de la première interface et
- une étape d'administration du fonctionnement de l'étape de détection et d'interdiction.

Comme on le comprend à la lecture de ce qui précède, un des avantages de la présente invention est qu'elle permet le porteur d'un dispositif objet de la présente invention prenant la forme d'une carte, qui a été victime d'une attaque de type "DOS" (acronyme de "Denial of Service" pour dénis de service), sans qu'il le sache, sur l'interface sans contact, d'une part, d'éviter le succès de cette attaque, puisque l'interface sans contact est rapidement bloquée et, d'autre part, de restaurer le fonctionnement de l'interface sans contact sans avoir à faire intervenir le fournisseur de la carte ou un autre intervenant externe.

Par exemple, dans le cas d'une carte d'accès à des locaux d'un système PACS (acronyme de "Physical Access Control System » pour système de contrôle d'accès physique), une attaque pourrait viser à empêcher les employés à entrer dans les locaux, ou à les forcer à faire appel, en grande nombre, au(x) responsable(s) du système de sécurité pour que ce dernier, considéré comme en panne, soit arrêté et que l'accès aux locaux devienne libre ou faiblement contrôlé. Dans ce cas, grâce à la mise en oeuvre de la présente invention, chaque employé porteur d'une carte d'accès pourra restaurer le fonctionnement de l'interface sans contact en mettant en oeuvre une identification utilisant l'interface à contact, par exemple par un lecteur de carte disponible à proximité de la porte d'accès considéré.

On remarque qu'un lecteur fonctionnant à distance peut communiquer avec l'entité électronique alors même que celle-ci est également connectée à un terminal fonctionnant par contact. Il peut s'agir par exemple d'une carte à microcircuit insérée dans un terminal adapté d'un véhicule lors du passage de celui-ci sous un portique muni d'un lecteur fonctionnant à distance. L'échange de données entre l'entité électronique et le lecteur à distance (par exemple pour l'ouverture d'une barrière et/ou le paiement d'un péage) peut ainsi être indépendante des conditions particulières gérées par le terminal à contacts placés dans le véhicule, telles que, par exemple la saisie d'un code secret par l'utilisateur sur ce terminal ou un interrupteur de commande au volant.

Dans le mode de réalisation qui vient d'être décrit, l'élément indicateur associé à chaque interface conditionne l'ensemble des échanges de données mettant en oeuvre cette interface. En variante, on prévoit que cet élément indicateur ne conditionne que l'échange de certaines données particulières de l'entité électronique, alors que d'autres données sont librement communiquées par l'entité électronique, même si l'interface en question est bloquée.

Ainsi, lorsque l'entité électronique est un document d'identification électronique, on peut prévoir que certaines données présentes sur le document (comme le nom de la personne concernée) soient communiquées même en cas de blocage, alors que l'émission d'autres données (par exemple les informations confidentielles du types données biométriques - empreintes digitales, iris ou image faciale) ne peuvent être émises par l'entité électronique via une interface qu'à la condition cette interface ne soit pas bloquée.

Dans ce cas, la présence d'un blocage d'interface ne conditionnera pas l'établissement de la liaison sans contact à proprement parler, mais certaines étapes d'émission des données confidentielles.

Selon une variante (qui peut être éventuellement combinée avec le mode de réalisation qui vient d'être décrit), on peut prévoir que la valeur de l'élément indicateur conditionne la réception de données via l'interface à laquelle cet élément indicateur est associé. On peut ainsi éviter par exemple qu'un code d'identification soit présenté à l'entité électronique via la liaison sans contact par un tiers malintentionné, à l'insu du porteur autorisé de l'entité électronique, en bloquant la réception de données par cette interface suite à la présentation de plusieurs codes faux par ce tiers.

Par ailleurs, les données concernées par l'autorisation d'échange ne sont pas nécessairement limitées aux données applicatives de l'entité électronique (c'est-à-dire notamment les données portées par l'entité électronique dans sa fonction de support d'information), mais peuvent également inclure des données d'autres types, telles que des données permettant l'établissement d'un protocole de communication.

Les modes de réalisation qui viennent d'être décrits, avec les variantes envisagées, ne constituent que des exemples possibles de mise en oeuvre de l'invention qui ne s'y limite pas.

## Revendications

1. Dispositif électronique portable (100), **caractérisé en ce qu'**il comporte:
- une première interface de communication (115, 120), sans contact, adaptée à établir une communication avec une première entité électronique externe,
- une deuxième interface de communication (110, 125), avec contact, comportant des moyens d'émission de données et des moyens de réception de données, ladite deuxième interface étant différente de la première interface et adaptée à établir une communication avec une deuxième entité électronique externe, la deuxième interface étant configurée pour recevoir un code d'identification personnel autorisant l'administration des moyens de sécurité,
le dispositif comportant en outre:
- des premiers moyens de sécurité (131, 132, 133, 140, 150, 151) adaptés à détecter au moins un type d'attaques et à interdire au moins une communication de données mettant en oeuvre ladite première interface après détection d'une dite attaque, et
- des moyens d'administration (140, 150, 151) des premiers moyens de sécurité mettant en oeuvre la deuxième interface pour administrer les premiers moyens de sécurité au moins en débloquant la première interface lorsque ladite au moins une communication a été interdite.

2. Dispositif selon l'une la revendication 1, dans lequel la deuxième interface est configurée pour recevoir des données d'authentification autorisant l'administration des moyens de sécurité.

3. Dispositif selon la revendication 2, dans lequel les premiers moyens de sécurité mettent en oeuvre les données d'authentification, les moyens d'administration étant adaptés à modifier lesdites données d'authentification.

4. Dispositif (100) selon l'une quelconque des revendications 1 à 3, **caractérisé en ce que** les moyens d'administration (140, 150, 151) sont adaptés à ré-autoriser une communication de données mettant en oeuvre ladite première interface (115, 120) après interdiction, par les premiers moyens de sécurité (131, 132, 133, 140, 151, 151), de ladite communication sur détection d'une dite attaque.

5. Dispositif (100) selon l'une quelconque des revendications 1 à 4, **caractérisé en ce que** la première interface (115, 120) est munie de premiers moyens de réception (121) de données depuis une première entité électronique externe, d'une première zone mémoire de données (130) contenant au moins un premier élément compteur (131), au moins un premier élément indicateur (132) et au moins une première valeur seuil (133), ledit premier élément compteur comptant, d'une part, au moins un nombre d'occurrences d'un événement prédéterminé survenu dans ledit dispositif sur réception de données par lesdits premiers moyens de réception, et, étant, d'autre part, susceptible d'atteindre ladite première valeur seuil, ledit premier élément indicateur passant d'un premier état à un second état lorsque ledit premier élément compteur a atteint ladite première valeur seuil.

6. Dispositif (100) selon l'une quelconque des revendications 1 à 5, **caractérisé en ce que** la deuxième interface (110,125) est munie de deuxièmes moyens de réception de données (126) depuis une deuxième entité électronique externe, d'une deuxième zone mémoire de données (135) contenant au moins un deuxième élément compteur (136), au moins un deuxième élément indicateur (137) et au moins une deuxième valeur seuil (138), ledit deuxième élément compteur comptant, d'une part, au moins un nombre d'occurrences dudit événement prédéterminé survenu dans ledit dispositif sur réception de données par lesdits deuxièmes moyens de réception, et, étant, d'autre part, susceptible d'atteindre ladite deuxième valeur seuil, ledit deuxième élément indicateur passant d'un premier état à un second état lorsque ledit deuxième élément compteur a atteint ladite deuxième valeur seuil.

7. Dispositif (100) selon l'une quelconque des revendications 5 à 6, **caractérisé en ce qu'**il comporte un moyen de blocage (140, 150, 151) d'au moins une partie du fonctionnement dudit dispositif lorsqu'un élément indicateur (132, 137) est dans le second état.

8. Dispositif (100) selon l'une quelconque des revendications 5 à 7, **caractérisé en ce qu'**il comporte un moyen de blocage (140, 150, 151) qui bloque toute exécution sur réception de données sur l'interface correspondante (120, 125) lorsque l'élément indicateur correspondant (132, 137) est dans le second état sauf la réception d'une instruction de déblocage.

9. Dispositif (100) selon l'une quelconque des revendications 5 à 8, **caractérisé en ce qu'**il comporte un moyen de commutation (140,150,151) adapté à mettre en oeuvre des moyens de sécurisation (140, 150, 151) du dispositif plus sécurisés lorsqu'un élément indicateur (132, 137) est dans le second état que lorsque ledit moyen indicateur est dans le premier état.

10. Dispositif (100) selon l'une quelconque des revendications 4 à 9, **caractérisé en ce qu'**il comporte un moyen de commande (140, 150, 151) de passage d'au moins un élément indicateur (132, 137) du second état au premier état, lors d'une tentative d'authentification réussie mettant en oeuvre une interface (125,120) ne correspondant pas audit élément indicateur.

11. Dispositif (100) selon l'une quelconque des revendications 5 à 10, **caractérisé en ce qu'**il comporte un moyen d'initialisation (140, 150, 151) du compteur correspondant (131, 136), ledit moyen d'initialisation réinitialisant ledit compteur correspondant lorsqu'une authentification mettant en oeuvre l'interface correspondante (120,125) est réussie.

12. Dispositif (100) selon l'une quelconque des revendications 1 à 11, **caractérisé en ce que** ladite première interface (115, 120) comporte des moyens de réception (121) de données par un protocole de communication sans contact.

13. Dispositif (100) selon l'une quelconque des revendications 1 à 12, **caractérisé en ce que** ladite deuxième interface (125) comporte des moyens de réception de données (126) mettant en oeuvre un protocole de communication par contact.

14. Dispositif selon l'une des revendications précédentes, dans lequel ledit code d'identification personnel comporte au moins l'un d'un code PIN et d'une empreinte digitale.

15. Procédé de sécurisation d'un dispositif électronique portable comportant :
- une étape de communication (315) avec une première entité électronique externe par l'intermédiaire d'une première interface de communication sans contact (115, 120),
- une étape de détection (320, 330) d'au moins un type d'attaque mettant en oeuvre la première interface et d'interdiction d'au moins une communication de données mettant en oeuvre ladite première interface après détection d'une dite attaque, **caractérisé en ce qu'**il comporte de plus
- une étape de communication (345) avec une deuxième entité électronique externe par l'intermédiaire d'une deuxième interface de communication avec contact (110, 125) comportant des moyens d'émission de données et des moyens de réception de données, ladite deuxième interface étant différente de la première interface et la deuxième interface étant configurée pour recevoir un code d'identification personnel autorisant l'administration du fonctionnement de l'étape de détection et d'interdiction, et
- une étape d'administration (355) du fonctionnement de l'étape de détection et d'interdiction, mettant en oeuvre la deuxième interface et comportant au moins un déblocage de la première interface lorsque ladite au moins une communication a été interdite.

16. Procédé selon la revendication 15, comportant en outre une réception par la deuxième interface de données d'authentification autorisant ladite étape d'administration.

17. Procédé selon l'une des revendications 15 et 16, dans lequel ledit code d'identification personnel comporte au moins l'un d'un code PIN et d'une empreinte digitale.

18. Utilisation d'une interface avec contact (110, 125) d'un dispositif électronique portable (100), ladite interface avec contact (110, 125) comportant des moyens d'émission de données et des moyens de réception de données, ladite interface avec contact étant adaptée à établir une communication avec une entité électronique externe, pour administrer (355) des moyens de sécurité (131, 132, 133, 140, 150, 151) adaptés à interdire au moins une communication de données mettant en oeuvre une deuxième interface sans contact (115, 120) du dispositif électronique portable au moins en débloquant la deuxième interface sans contact lorsque ladite au moins une communication a été interdite, après détection d'une attaque d'au moins un type d'attaques, la deuxième interface sans contact (115, 120) étant adaptée à établir une communication avec une entité électronique externe, la deuxième interface sans contact étant configurée pour recevoir un code d'identification personnel autorisant l'administration des moyens de sécurité, et ladite administration (140, 150, 151) des premiers moyens de sécurité mettant en oeuvre la deuxième interface sans contact pour administrer les premiers moyens de sécurité.

19. Utilisation selon la revendication 18, dans laquelle la mise en oeuvre de ladite interface comporte la réception des données d'authentification autorisant ladite administration des moyens de sécurité.

20. Utilisation selon l'une des revendications 18 et 19, dans lequel ledit code d'identification personnel comporte au moins l'un d'un code PIN et d'une empreinte digitale.

## Patentansprüche

1. Tragbare elektronische Vorrichtung (100), **dadurch gekennzeichnet, dass** sie umfasst:
- eine erste kontaktlose Kommunikationsschnittstelle (115, 120), die ausgebildet ist, um eine Kommunikation mit einer ersten externen elektronischen Einheit herzustellen,
- eine zweite kontaktbehaftete Kommunikationsschnittstelle (110, 125), die Mittel zum Senden von Daten und Mittel zum Empfangen von Daten umfasst, wobei sich die zweite Schnittstelle von der ersten Schnittstelle unterscheidet und ausgebildet ist, um eine Kommunikation mit einer zweiten externen elektronischen Einheit herzustellen, wobei die zweite Schnittstelle so konfiguriert ist, dass sie einen persönlichen Identifikationscode empfängt, der die Steuerung der Sicherheitsmittel autorisiert,
wobei die Vorrichtung ferner umfasst:
- erste Sicherheitsmittel (131, 132, 133, 140, 150, 151), die ausgebildet sind, um mindestens eine Art von Angriff zu erfassen und mindestens eine Datenkommunikation zu verhindern, wobei die erste Schnittstelle nach dem Erfassen eines Angriffs implementiert wird, und
- Mittel zur Steuerung (140, 150, 151) der ersten Sicherheitsmittel, wobei die zweite Schnittstelle implementiert wird, um die ersten Sicherheitsmittel zu steuern, indem mindestens die erste Schnittstelle entsperrt wird, wenn die mindestens eine Kommunikation verhindert wurde.

2. Vorrichtung nach Anspruch 1, wobei die zweite Schnittstelle konfiguriert ist, um Authentifizierungsdaten zu empfangen, die die Steuerung der Sicherheitsmittel autorisieren.

3. Vorrichtung nach Anspruch 2, wobei die ersten Sicherheitsmittel die Authentifizierungsdaten implementieren, wobei die Steuerungsmittel ausgebildet sind, um die Authentifizierungsdaten zu modifizieren.

4. Vorrichtung (100) nach einem der Ansprüche 1 bis 3, **dadurch gekennzeichnet, dass** die Steuerungsmittel (140, 150, 151) ausgebildet sind, um eine Datenkommunikation wieder zu autorisieren, bei der die erste Schnittstelle (115, 120) implementiert wird, nachdem die Kommunikation beim Erfassen eines Angriffs durch die ersten Sicherheitsmittel (131, 132, 133, 140, 150, 151) verhindert wurde.

5. Vorrichtung (100) nach einem der Ansprüche 1 bis 4, **dadurch gekennzeichnet, dass** die erste Schnittstelle (115, 120) mit ersten Mitteln zum Empfangen (121) von Daten von einer ersten externen elektronischen Einheit, einem ersten Datenspeicherbereich (130), der mindestens ein erstes Zählelement (131), mindestens ein erstes Anzeigeelement (132) und mindestens einen ersten Schwellenwert (133) enthält, versehen ist, wobei das erste Zählelement einerseits mindestens eine Anzahl von Auftritten eines vorbestimmten Ereignisses zählt, das in der Vorrichtung beim Empfang von Daten durch die ersten Mittel zum Empfangen aufgetreten ist, und andererseits geeignet ist, den ersten Schwellenwert zu erreichen, wobei das erste Anzeigeelement von einem ersten Zustand in einen zweiten Zustand übergeht, wenn das erste Zählelement den ersten Schwellenwert erreicht hat.

6. Vorrichtung (100) nach einem der Ansprüche 1 bis 5, **dadurch gekennzeichnet, dass** die zweite Schnittstelle (110, 125) mit zweiten Mitteln zum Empfangen (126) von Daten von einer zweiten externen elektronischen Einheit, einem zweiten Datenspeicherbereich (135), der mindestens ein zweites Zählelement (136), mindestens ein zweites Anzeigeelement (137) und mindestens einen zweiten Schwellenwert (138) enthält, versehen ist, wobei das zweite Zählelement einerseits mindestens eine Anzahl von Auftritten des vorbestimmten Ereignisses zählt, das in der Vorrichtung beim Empfang von Daten durch die zweiten Mittel zum Empfangen aufgetreten ist, und andererseits geeignet ist, den zweiten Schwellenwert zu erreichen, wobei das zweite Anzeigeelement von einem ersten Zustand in einen zweiten Zustand übergeht, wenn das zweite Zählelement den zweiten Schwellenwert erreicht hat.

7. Vorrichtung (100) nach einem der Ansprüche 5 bis 6, **dadurch gekennzeichnet, dass** sie ein Mittel zum Sperren (140, 150, 151) mindestens eines Teils der Funktion der Vorrichtung umfasst, wenn sich ein Anzeigeelement (132, 137) im zweiten Zustand befindet.

8. Vorrichtung (100) nach einem der Ansprüche 5 bis 7, **dadurch gekennzeichnet, dass** sie ein Mittel zum Sperren (140, 150, 151) umfasst, das, beim Empfangen von Daten an der entsprechenden Schnittstelle (120, 125) jede Ausführung sperrt, wenn sich das entsprechende Anzeigeelement (132, 137) im zweiten Zustand befindet, ausgenommen beim Empfangen einer Entsperrungsanweisung.

9. Vorrichtung (100) nach einem der Ansprüche 5 bis 8, **dadurch gekennzeichnet, dass** sie ein Mittel zum Umschalten (140, 150, 151) umfasst, das ausgebildet ist, um stärker gesicherte Sicherheitsmittel (140, 150, 151) der Vorrichtung zu implementieren, wenn sich ein Anzeigeelement (132, 137) im zweiten Zustand befindet, als wenn sich das Anzeigemittel im ersten Zustand befindet.

10. Vorrichtung (100) nach einem der Ansprüche 4 bis 9, **dadurch gekennzeichnet, dass** sie ein Mittel zum Steuern (140, 150, 151) des Übergangs mindestens eines Anzeigeelements (132, 137) vom zweiten Zustand in den ersten Zustand während eines erfolgreichen Authentifizierungsversuchs umfasst, wobei eine Schnittstelle (125, 120) implementiert wird, die nicht dem Anzeigeelement entspricht.

11. Vorrichtung (100) nach einem der Ansprüche 5 bis 10, **dadurch gekennzeichnet, dass** sie ein Mittel zur Initialisierung (140, 150, 151) des entsprechenden Zählers (131, 136) umfasst, wobei das Mittel zur Initialisierung den entsprechenden Zähler reinitialisiert, wenn eine Authentifizierung, die die entsprechende Schnittstelle (120, 125) implementiert, erfolgreich ist.

12. Vorrichtung (100) nach einem der Ansprüche 1 bis 11, **dadurch gekennzeichnet, dass** die erste Schnittstelle (115, 120) Mittel zum Empfangen (121) von Daten über ein kontaktloses Kommunikationsprotokoll umfasst.

13. Vorrichtung (100) nach einem der Ansprüche 1 bis 12, **dadurch gekennzeichnet, dass** die zweite Schnittstelle (125) Mittel zum Empfangen von Daten (126) umfasst, die ein kontaktbehaftetes Kommunikationsprotokoll implementieren.

14. Vorrichtung nach einem der vorhergehenden Ansprüche, wobei der persönliche Identifizierungscode mindestens einen aus einem PIN-Code und einem Fingerabdruck umfasst.

15. Verfahren zur Sicherung einer tragbaren elektronischen Vorrichtung, umfassend:
- einen Schritt zur Kommunikation (315) mit einer ersten externen elektronischen Einheit mittels einer ersten kontaktlosen Kommunikationsschnittstelle (115, 120),
- einen Schritt zum Erfassen (320, 330) mindestens einer Art von Angriff, wobei die erste Schnittstelle implementiert wird, und zum Verhindern mindestens einer Datenkommunikation, bei der die erste Schnittstelle nach dem Erfassen eines Angriffs implementiert wird,
**dadurch gekennzeichnet, dass** es ferner umfasst
- einen Schritt zur Kommunikation (345) mit einer zweiten externen elektronischen Einheit mithilfe einer zweiten kontaktbehafteten Kommunikationsschnittstelle (110, 125), die Mittel zum Senden von Daten und Mittel zum Empfangen von Daten umfasst, wobei sich die zweite Schnittstelle von der ersten Schnittstelle unterscheidet und die zweite Schnittstelle konfiguriert ist, um einen persönlichen Identifizierungscode zu empfangen, der die Steuerung der Funktion des Schritts zum Erfassen und zum Verhindern autorisiert, und
- einen Schritt zum Steuern (355) der Funktion des Schritts zum Erfassen und zum Verhindern, wobei die zweite Schnittstelle implementiert wird und mindestens eine Entsperrung der ersten Schnittstelle umfasst, wenn die mindestens eine Kommunikation verhindert wurde.

16. Verfahren nach Anspruch 15, das ferner einen Empfang von Authentifizierungsdaten, die den Schritt zur Steuerung autorisieren, durch die zweite Schnittstelle umfasst.

17. Verfahren nach einem der Ansprüche 15 und 16, wobei der persönliche Identifizierungscode mindestens einen aus einem PIN-Code und einem Fingerabdruck umfasst.

18. Verwendung einer kontaktbehafteten Schnittstelle (110, 125) einer tragbaren elektronischen Vorrichtung (100), wobei die kontaktbehaftete Schnittstelle (100, 125) Mittel zum Senden von Daten und Mittel zum Empfangen von Daten umfasst, wobei die kontaktbehaftete Schnittstelle ausgebildet ist, um eine Kommunikation mit einer externen elektronischen Einheit herzustellen, um Sicherheitsmittel (131, 132, 133, 140, 150, 151) zu steuern (355), die ausgebildet sind, um mindestens eine Kommunikation von Daten zu verhindern, wobei eine zweite kontaktlose Schnittstelle (115, 120) der tragbaren elektronischen Vorrichtung mindestens beim Entsperren der zweiten kontaktlosen Schnittstelle implementiert wird, wenn die mindestens eine Kommunikation nach dem Erfassen eines Angriffs von mindestens einer Art von Angriff verhindert wurde, wobei die zweite kontaktlose Schnittstelle (115, 120) ausgebildet ist, um eine Kommunikation mit einer externen elektronischen Einheit herzustellen, wobei die zweite kontaktlose Schnittstelle konfiguriert ist, um einen persönlichen Identifizierungscode zu empfangen, der die Steuerung der Sicherheitsmittel autorisiert und wobei die Steuerung (140, 150, 151) der ersten Sicherheitsmittel die zweite kontaktlose Schnittstelle implementiert, um die ersten Sicherheitsmittel zu steuern.

19. Verwendung nach Anspruch 18, wobei das Implementieren der Schnittstelle das Empfangen der Authentifizierungsdaten umfasst, die die Steuerung der Sicherheitsmittel autorisieren.

20. Verwendung nach einem der Ansprüche 18 und 19, wobei der persönliche Identifizierungscode mindestens einen aus einem PIN-Code und einem Fingerabdruck umfasst.

## Claims

1. Portable electronic device (100), **characterised in that** it includes:
- a first, contactless, communication interface (115, 120) adapted to establish a communication with a first external electronic entity,
- a second, contact, communication interface (110, 125) comprising means for sending data and means for receiving data, said second interface being different from the first interface and adapted for establishing a communication with a second external electronic entity, the second interface being configured to receive a personal identification code authorising the administration of the security means,
the device furthermore comprising:
- first security means (131, 132, 133, 140, 150, 151) adapted to detect at least one type of attack and to prohibit at least one communication of data using said first interface after detection of a said attack, and
- means for administration (140, 150, 151) of the first security means using the second interface so as to administer the first security means at least by enabling the first interface when said at least one communication has been prohibited.

2. Device according to claim 1, in which the second interface is configured to receive authentication data authorising the administration of the security means.

3. Device according to claim 2, wherein the first security means use the authentication data, the administration means being adapted to modify said authentication data.

4. Device (100) according to any one of claims 1 to 3, **characterised in that** the administration means (140, 150, 151) are adapted to re-authorise communication of data using said first interface (115, 120) after prohibition, by the first security means (131, 132, 133, 140, 150, 151), of said communication on detection of a said attack.

5. Device (100) according to any one of claims 1 to 4, **characterised in that** the first interface (115, 120) is provided with first means for receiving (121) data from a first external electronic entity, a first data memory area (130) containing at least one first counter element (131), at least one first indicator element (132) and at least one first threshold value (133), said first counter element counting, on the one hand, at least one number of occurrences of a predetermined event that has occurred in said device on reception of data by said first receiving means, and, being, on the other hand, able to reach said first threshold value, said first indicator element going from a first state to a second state if said first counter element has reached said first threshold value.

6. Device (100) according to any one of claims 1 to 5, **characterised in that** the second interface (110, 125) is provided with second means for receiving data (126) from a second external electronic entity, a second data memory area (135) containing at least one second counter element (136), at least one second indicator element (137) and at least one second threshold value (138), said second counter element counting, on the one hand, at least one number of occurrences of said predetermined event that has occurred in said device on reception of data by said second receiving means, and, being, on the other hand, able to reach said second threshold value, said second indicator element going from a first state to a second state if said second counter element has reached said second threshold value.

7. Device (100) according to either of claims 5 and 6, **characterised in that** it includes means for blocking (140, 150, 151) at least one part of the operation of said device when an indicator element (132, 137) is in the second state.

8. Device (100) according to any one of claims 5 to 7, **characterised in that** it includes blocking means (140, 150, 151) that block all execution on reception of data via the corresponding interface (120, 125) when the corresponding indicator element (132, 137) is in the second state except the reception of an unblocking instruction.

9. Device (100) according to any one of claims 5 to 8, **characterised in that** it includes switching means (140, 150, 151) adapted to use more secure security means (140, 150, 151) of the device when an indicator element (132, 137) is in the second state than when said indicator means are in the first state.

10. Device (100) according to any one of claims 4 to 9, **characterised in that** it includes means for commanding (140, 150, 151) at least one indicator element (132, 137) to go from the second state to the first state in the event of a successful attempt at authentication using an interface (125, 120) that does not correspond to said indicator element.

11. Device (100) according to any one of claims 5 to 10, **characterised in that** it includes means for initialization (140, 150, 151) of the corresponding counter (131, 136), said initialization means reinitializing said corresponding counter if authentication using the corresponding interface (120, 125) succeeds.

12. Device (100) according to any one of claims 1 to 11, **characterised in that** said first interface (115, 120) includes means for receiving (121) data using a contactless communication protocol.

13. Device (100) according to any one of claims 1 to 12, **characterised in that** said second interface (125) includes means for receiving data (126) using a contact communication protocol.

14. Device according to one of the preceding claims, in which said personal identification code comprises at least one of a PIN code and of a fingerprint.

15. Method for securing a portable electronic device including:
- a step of communicating (315) with a first external electronic entity via a first contactless communication interface (115, 120),
- a step of detection (320, 330) of at least one type of attack using the first interface and of prohibition of at least one communication of data using said first interface after detection of a said attack, **characterised in that** it furthermore comprises
- a step of communicating (345) with a second external electronic entity via a second contact communication interface (110, 125) comprising means for sending data and means for receiving data, said second interface being different from the first interface and the second interface being configured to receive a personal identification code authorising the administration of the operation of the detection and prohibition step, and
- a step of administration (355) of the operation of the detection and prohibition step, using the second interface and comprising at least one unblocking of the first interface when said at least one communication has been prohibited.

16. Method according to claim 15, further comprising a reception by the second interface of authentication data authorising said administration step.

17. Method according to one of claims 15 and 16, in which said personal identification code comprises at least one of a PIN code and of a fingerprint.

18. Use of a contact interface (110, 125) of a portable electronic device (100), said contact interface (110, 125) comprising means for sending data and means for receiving data, said contact interface being adapted for establishing a communication with an external electronic entity, so as to administer (355) security means (131, 132, 133, 140, 150, 151) adapted for prohibiting at least one communication of data using a second contactless interface (115, 120) of the portable electronic device at least by unblocking the second contactless interface when said at least one communication has been prohibited, after detection of an attack of at least one type of attack, the second contactless interface (115, 120) being adapted for establishing a communication with an external electronic entity, the second contactless interface being configured to receive a personal identification code authorising the administration of the security means, and said administration (140, 150, 151) of first security means using the second contactless interface to administer the first security means.

19. Use according to claim 18, in which the implementation of said interface comprises the reception of authentication data authorising said administration of the security means.

20. Use according to one of claims 18 and 19, in which said personal identification code comprises at least one of a PIN code and of a fingerprint.
